# EUROPEAN PATENT APPLICATION

(11) **EP 2 375 816 A1**
(43) Date of publication of application: **12.10.2011**
(21) Application number: 09833436.0
(22) Date of filing: 15.12.2009
(51) Int. Cl.: H04W 36/12, H04W 36/16, H04W 36/24, H04W 36/38

(54) **MOBILE COMMUNICATION METHOD, BASE TRANSCEIVER STATION, RADIO NETWORK CONTROLLER, CORE NETWORK DEVICE, AND GATEWAY DEVICE**

(30) Priority: 15.12.2008 JP 2008318141
(71) Applicant: NTT DOCOMO, INC., Chiyoda-ku Tokyo 100-6150 (JP)
(72) Inventor: AOYAGI, Kenichiro, Tokyo 100-6150 (JP); MASUDA, Masafumi, Tokyo 100-6150 (JP); SATO, Takaaki, Tokyo 100-6150 (JP)
(74) Representative: HOFFMANN EITLE
(86) International application number: PCT/JP2009/070914
(87) International publication number: WO 2010/071133

(57) **Abstract**

A mobile communication method according to the present invention includes a step of determining whether or not a predetermined condition is satisfied in accordance with a connection request signal transmitted by a mobile station UE in a first connection state which is a state where the mobile station UE is connected to an access point APN#1 of a first network via a radio base station BTS and a core network device CN, and a step of switching the connection state of the mobile station UE from the first connection state to a second connection state in a case where the predetermined condition is determined to be satisfied, the second connection state being a state where the mobile station is connected to an access point APN¥#2 of a second network not via the core network device CN but via the radio base station BTS.

## Description

### TECHNICAL FIELD

The present invention relates to a mobile communication method, a radio base station, a radio network controller, a core network device and a gateway device.

### BACKGROUND ART

In recent years, there has been a discussion about the use of small radio base stations typified by femtocell radio base stations in mobile communication systems. There has also been a discussion about performing desired communications by mobile stations in an "off loaded connection state" in such mobile communication systems. Here, the "off loaded connection state" refers to a situation where a mobile station connects to a server apparatus or the like in the Internet not via a core network device but via the small radio base station.

In the "off loaded connection state," even in a case where the mobile station exchanges large volume data, the processing load in the core network device in the mobile communication system can be reduced by causing the mobile station to directly connect to the Internet or the like.

### SUMMARY OF THE INVENTION

### PROBLEMS TO BE SOLVED BY THE INVENTION

In the aforementioned conventional mobile communication systems, however, mobiles stations are each configured to continue using an access point until the end of communications, when starting the communications via the access point connected to a core network device.

In this respect, the present invention has been made in view of the aforementioned problem. An objective of the present invention is to provide a mobile communication method, a radio base station, a radio network controller, a core network device and a gateway device which allow a connection method between a mobile station and a server apparatus to be changed flexibly.

### MEANS FOR SOLVING THE PROBLEMS

The first feature of the present invention is summarized in that a mobile communication method including a step A of determining whether or not a predetermined condition is satisfied in accordance with a connection request signal transmitted by a mobile station in a first connection state which is a state where the mobile station is connected to an access point of a first network via a radio base station and a core network device, and a step B of switching the connection state of the mobile station from the first connection state to a second connection state in a case where the predetermined condition is determined to be satisfied, the second connection state being a state where the mobile station is connected to an access point of a second network not via the core network device.

The second feature of the present invention is summarized in that a mobile communication method including a step A of determining whether or not a predetermined condition is satisfied in accordance with a connection request signal transmitted by a mobile station in a first connection state which is a state where the mobile station is connected to an access point of a first network via a radio base station and a core network device, and a step B of starting by the radio base station a procedure to establish a bearer with an access point of the second network not via the core network device in a case where the predetermined condition is determined to be satisfied.

The third feature of the present invention is summarized in that A radio base station including a determination unit configured to determine whether or not a predetermined condition is satisfied in accordance with a connection request signal transmitted by a mobile station in a first connection state which is a state where the mobile station is connected to an access point of a first network via the radio base station and a core network device, and a switch request signal transmission unit configured to switch the connection state of the mobile station from the first connection state to a second connection state in a case where the predetermined condition is determined to be satisfied, the second connection state being a state where the mobile station is connected to an access point of a second network not via the core network device.

The fourth feature of the present invention is summarized in that a radio base station including a determination unit configured to determine whether or not a predetermined condition is satisfied in accordance with a connection request signal transmitted by a mobile station in a first connection state which is a state where the mobile station is connected to an access point of a first network via the radio base station and a core network device, and a bearer control unit configured to start a procedure to establish a bearer with an access point of the second network not via the core network device in a case where the predetermined condition is determined to be satisfied.

The fifth feature of the present invention is summarized in that a radio network controller arranged between a radio base station and a core network device including a determination unit configured to determine whether or not a predetermined condition is satisfied in accordance with a connection request signal transmitted by a mobile station in a first connection state which is a state where the mobile station is connected to an access point of a first network via the radio base station and the core network device, and a switch request signal transmission unit configured to transmit a switch request signal requesting to switch the connection state of the mobile station from the first connection state to a second connection state in a case where the predetermined condition is determined to be satisfied, the second confection state being a state where the mobile station is connected to an access point of a second network not via the core network device.

The sixth feature of the present invention is summarized in that a core network device including a determination unit configured to determine whether or not a predetermined condition is satisfied in accordance with a connection request signal transmitted by a mobile station in a first connection state which is a state where the mobile station is connected to an access point of a first network via a radio base station and the core network device, and a switch processing unit configured to start a procedure to switch the connection state of the mobile station from the first connection state to a second connection state in a case where the predetermined condition is determined to be satisfied, the second connection state being a state where the mobile station is connected to an access point of a second network not via the core network device.

The seventh feature of the present invention is summarized in that a gateway device including a determination unit configured to determine whether or not a predetermined condition is satisfied in accordance with a connection request signal transmitted by a mobile station in a first connection state which is a state where the mobile station is connected to an access point of a first network via a radio base station and the core network device, and a switch processing unit configured to start a procedure to switch the connection state of the mobile station from the first connection state to a second connection state in a case where the predetermined condition is determined to be satisfied, the second connection state being a state where the mobile station is connected to an access point of a second network not via the core network device.

### EFFECTS OF THE INVENTION

As described above, according to the present invention, it is possibly to provide a mobile communication method, a radio base station, a radio network controller, a core network device and a gateway device which allow a connection method between a mobile station and a server apparatus to be changed flexibly.

### BRIEF DESCRIPTION OF DRAWINGS

[FIG. 1] FIG. 1 is an overall configuration diagram of a mobile communication system according to a first embodiment of the present invention.
[FIG. 2] FIG. 2 is a functional block diagram of a radio base station according to the first embodiment of the present invention.
[FIG. 3] FIG. 3 is a sequence diagram showing an operation of the mobile communication system according to the first embodiment of the present invention.
[FIG. 4] FIG. 4 is a functional block diagram of a radio network controller according to a second embodiment of the present invention.
[FIG. 5] FIG. 5 is a sequence diagram showing an operation of the mobile communication system according to a second embodiment of the present invention.
[FIG. 6] FIG. 6 is a functional block diagram of a core network device according to a third embodiment of the present invention.
[FIG. 7] FIG. 7 is a sequence diagram showing an operation of the mobile communication system according to a third embodiment of the present invention.
[FIG. 8] FIG. 8 is a sequence diagram showing an operation of the mobile communication system according to Modification Example 1 of the present invention.

### MODES FOR CARRYING OUT THE INVENTION

### (Configuration of Mobile Communication System according to First Embodiment of Present Invention)

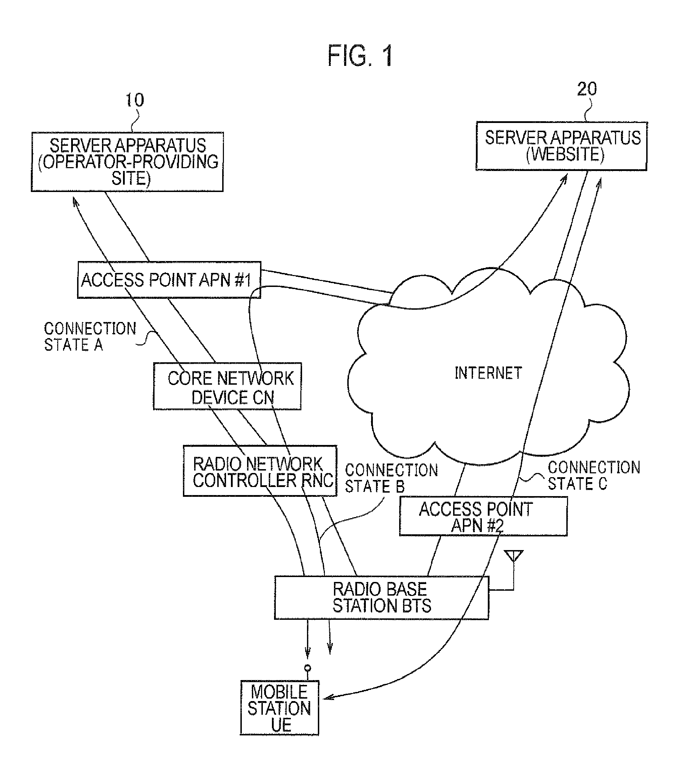

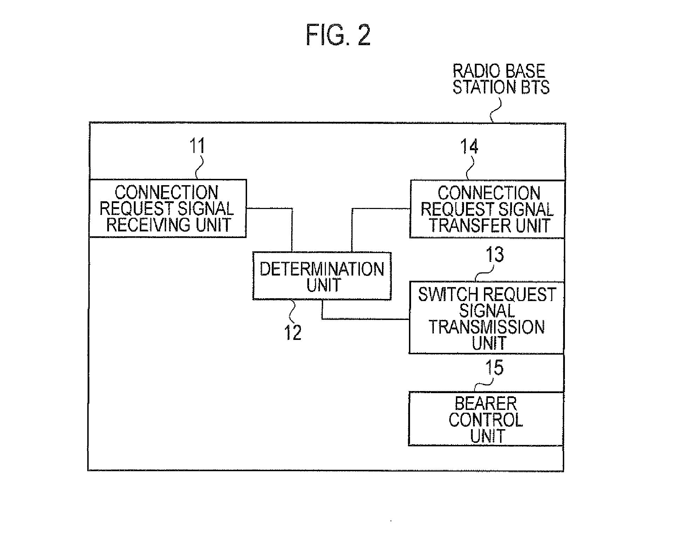

The configuration of a mobile communication system according to a first embodiment of the present invention will be described with reference to FIG. 1 and FIG. 2.

As shown in FIG. 1, the mobile communication system according to the embodiment includes a radio base station BTS, a radio network controller RNC, a core network device CN, access points APN #1, APN #2 and server apparatuses 10, 20.

The server apparatus 10 is a first server apparatus provided in a dedicate network (operator network, first network) provided by an operator (communication carrier), and is configured to provide operator-providing site display data. The server apparatus 20 is a second server apparatus provided in a public data communication network (second network) such as the Internet, and is configured to provide website display data.

The server apparatus 10 and the server apparatus 20 are each configured to include a web server function, a database server function, a VoIP server function and the like, for example.

The access point APN #1 is a server apparatus configured to function as an access point to an operator network (FOMA (registered trademark) network, for example). The access point APN # 2 is a server apparatus configured to function as an access point to a public data communication network.

The mobile communication system according to the embodiment may be a WCDMA mobile communication system or an LTE (Long Term Evolution) mobile communication system.

Note that, if the mobile communication system according to the embodiment is an LTE mobile communication system, the functions of the radio network controller RNC are arranged in the core network device CN and a radio base station eNodeB. As the core network device CN in the embodiment, a switching center or the like is supposedly used.

Here, the functions of the core network device CN and the functions of the radio network controller RNC may be provided in the radio base station BTS or may be provided in gateway devices HNB-GW, HeNB-GW.

As shown in FIG. 1, in a connection state A (first connection state), which is a state where the mobile station UE is connected to the access point APN #1 via the radio base station BTS, the radio network controller RNC and the core network device CN, i.e., in an "on loaded connection statue," the mobile station UE can receive the operator-providing site display data from the server apparatus 10 via a bearer established between the radio base station BTS and the access point APN #1.

Moreover, in a connection state B (first connection state), which is a state where the mobile station UE is connected to the access point APN #1 via the radio base station BTS, the radio network controller RNC and the core network device CN, i.e., in an "on loaded connection state," the mobile station UE can receive the website display data from the server apparatus 20 via a bearer established between the radio base station BTS and the access point APN #1.

Furthermore, in a connection state C (second connection state), which is a state where the mobile station UE is connected to the access point APN #2 not via the radio network controller RNC and the core network device CN but via the radio base station BTS, the radio network controller RNC and the core network device CN, i.e. , in an "off loaded connection state, " the mobile station UE can receive the website display data from the server apparatus 20 via a bearer established between the radio base station BTS and the access point APN #2.

In addition, the radio base station BTS according to the embodiment may be a small radio base station such as a femtocell radio base station (Home-eNB or the like, for example), or a macrocell radio base station.

As shown in FIG. 2, the radio base station BTS includes a connection request signal receiving unit 11, a determination unit 12, a switch request signal transmission unit 13, a connection request signal transfer unit 14 and a bearer control unit 15.

The connection request signal receiving unit 11 is configured to receive a connection request signal (an HTTP signal or the like, for example) transmitted by a mobile station UE for a specific server.

The determination unit 12 is configured to determine whether or not a predetermined condition is satisfied in accordance with the connection request signal received by the connection request signal receiving unit 11.

Specifically, the determination unit 12 may be configured to determine that the predetermined condition is satisfied in a case where destination address information included in the connection request signal transmitted by a mobile station UE in the connection state A or B is predetermined address information.

The determination unit 12 may be configured to determine that the predetermined condition is satisfied in a case where an HTTP signal addressed to a server apparatus in the Internet for providing predetermined website display data is received as a connection request signal transmitted by a mobile station UE in the connection state A or B, for example.

In addition, the determination unit 12 may be configured to determine that the predetermined condition is satisfied in a case where the access form between the radio base station BTS and the Internet is a predetermined form.

The determination unit 12 may be configured to determine that the access form between the radio base station BTS and the Internet is the predetermined form, i.e., to determine that the predetermined condition is satisfied in a case where the access Line between the radio base station BTS and the Internet is not an ISDN line, or the bandwidth of the access line between the radio base station BTS and the Internet exceeds a predetermined value, for example.

The switch request signal transmission unit 13 is configured to transmit a switch request signal to the core network device CN in a case where the determination unit 12 determines that a predetermined condition is satisfied.

Here, the switch request signal is a signal making a request to switch the connection state of the mobile station UE from the connection state A or B to the connection state C.

Note that, the switch request signal transmission unit 13 may be configured to transmit a switch request signal to the core network device CN only in a case where the determination unit 12 determines that a predetermined condition is satisfied, and also the user of the mobile station UE performs a predetermined operation (such as an input operation of predetermined information on the display screen, for example) .

In the aforementioned case, the radio base station BTS may include a function to allow a selection whether or not to switch the connection state of the mobile station UE from the connection state A or B to the connection state C. Such a function may allow the user to make a selection on the display screen of the mobile station UE or to make a selection as a response to LED display on the mobile station UE or to make a selection as a response to audio output from the mobile station UE, for example.

The connection request signal transfer unit 14 is configured to transfer the connection request signal received by the connection request signal receiving unit 11, in accordance with the connection state of the mobile station UE.

The connection request signal transfer unit 14 is configured to transfer the connection request signal received by the connection request signal receiving unit 11 to the core network CN or the access point APN #1 via a predetermined bearer in a case where the connection state of the mobile station UE is the connection state A or B, for example.

On the other hand, the connection request signal transfer unit 14 is configured to transfer the connection request signal received by the connection request signal receiving unit 11 to the access point APN #2 via a predetermined bearer in a case where the connection state of the mobile station UE is the connection state C.

Note that, the connection request signal transfer unit 14 may be configured to transfer the connection request signal received by the connection request signal receiving unit 11 to either one of a bearer for the connection state B and a bearer for the connection state C in accordance with destination address information or the like included in the connection request signal, in a case where both of the bearer for the connection state B and the bearer for the connection state C are established.

The bearer control unit 15 is configured to establish the bearers for the connection states A to C. Here, the bearer for the connection state A and the bearer for the connection state B are bearers established between the radio base station BTS and the access point APN #1. In addition, the bearer for the connection state C is a bearer established between the radio base station BTS and the access point APN #2.

### (operation of Mobile Communication System according to First Embodiment of Present Invention)

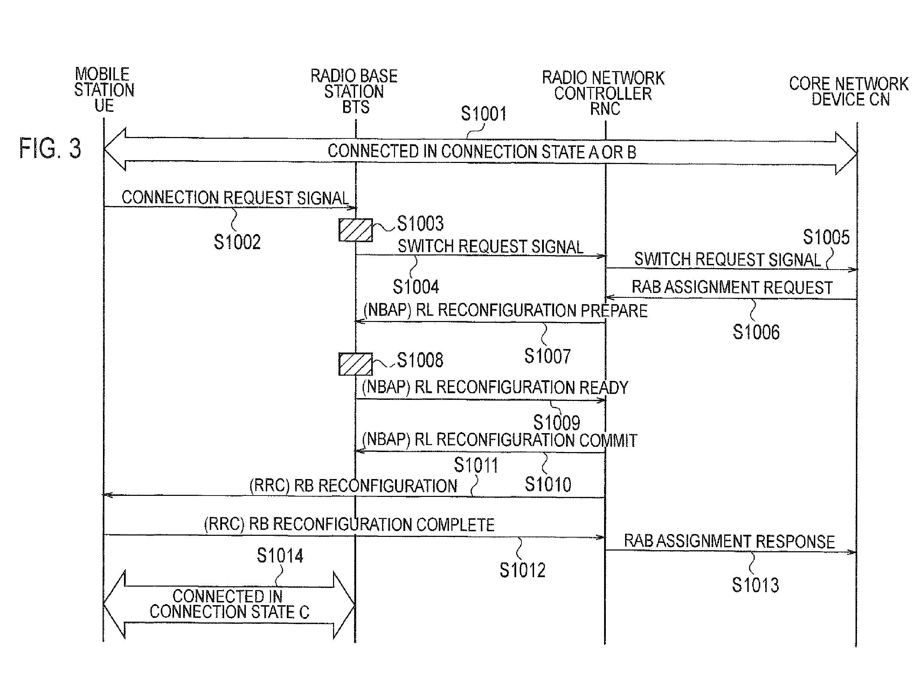

An operation of the mobile communication system according to the first embodiment of the present invention will be described with reference to FIG. 3.

As shown in FIG. 3, in a case where the mobile station UE in the connection state A or B displays an operator-providing site provided by the server apparatus 10 or a website A provided by the server apparatus 20 in step S1001, the mobile station UE transmits to the radio base station BTS a connection request signal for a website B provided by the server apparatus 20 in step S1002.

In step S1003, the radio base station BTS determines whether or not a predetermined condition is satisfied. The radio base station BTS determines whether or not the destination address information included in the connection request signal transmitted by the mobile station UE in the connection state A or B is predetermined address information, for example.

When determining that the predetermined condition is satisfied, the radio base station BTS transmits a switch request signal to the radio network controller RNC in step S1004.

Meanwhile, when determining that the predetermined condition is not met, the radio base station BTS transfers the received connection request signal to the radio network controller RNC.

In step S1005, the radio network controller RNC transfers the received switch request signal to the core network device CN.

In step S1006, the core network device CN starts a procedure to switch the connection state of the mobile station UE to the connection state C by transmitting an "RAB Assignment Request" message to the radio network controller RNC.

In step S1007, the radio network controller RNC transmits a "Radio Link Reconfiguration Prepare" message to the radio base station BTS in accordance with the received "RAB Assignment Request" message.

In step S1008, the radio base station BTS performs a procedure to switch the connection state of the mobile station UE from the connection state A or B to the connection state C in accordance with the "Radio Link Reconfiguration Prepace" message.

In step S1009, the radio base station BTS transmits a "Radio Link Reconfiguration Ready" message to the radio network controller RNC.

In step S1010, the radio network controller RNC transmits a "Radio Link Reconfiguration Commit" message to the radio base station BTS.

In step S1011, the radio network controller RNC transmits a "Radio Bearer Reconfiguration" message to the mobile station UE.

In step S1012, the mobile station UE transmits a "Radio Bearer Reconfiguration Complete" message to the radio network controller RNC.

In step S1013, the radio network controller RNC transmits a "RAB Assignment Response" message to the core network device CN.

As a result, the mobile station UE in the connection state C displays the website provided by the server apparatus 20 in step S1014.

Note that, instead of the core network device CN, the radio network controller RNC or the gateway device HNB-GW may receive the switch request signal and then starts the procedure to switch the connection state of the mobile station UE to the connection state C in accordance with the switch request signal.

### (Advantageous Effect of Mobile Communication System according to First Embodiment of Present Invention)

With the mobile communication system according to the first embodiment of the present invention, it is possible to actively use the "off loaded connection state" by switching the access point APN to which the mobile station UE is connected from one to another without disconnecting communications. Thus, the processing load on the core network device CN can be reduced.

Moreover, with the mobile communication system according to the first embodiment of the present invention, it is possible to actively use the "off loaded connection state" by switching the access point APN to which the mobile station UE is connected from one to another without disconnecting communications. The mobile station UE thus can seamlessly display a website in the Internet with low costs.

Furthermore, with the mobile communication system according to the first embodiment of the present invention, the mobile station UE can automatically use the "off loaded connection state" for communications with home electrical appliances in the home domain to which the radio base station BTS belongs to.

### (Mobile Communication System according to Second Embodiment of Present Invention)

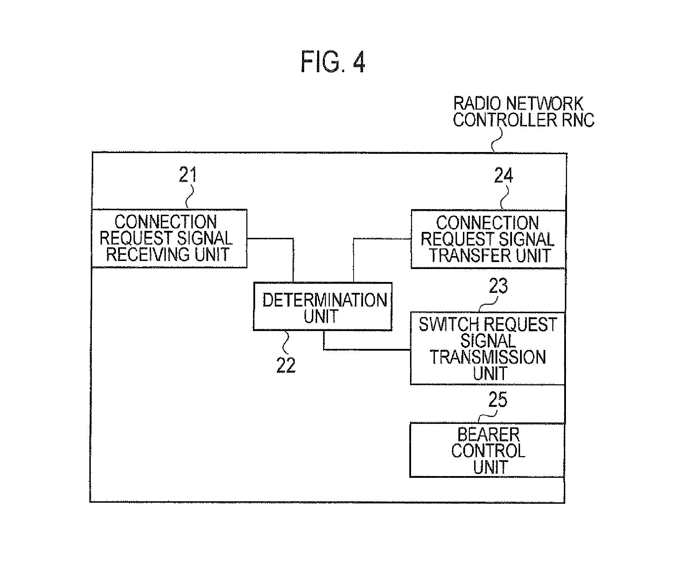

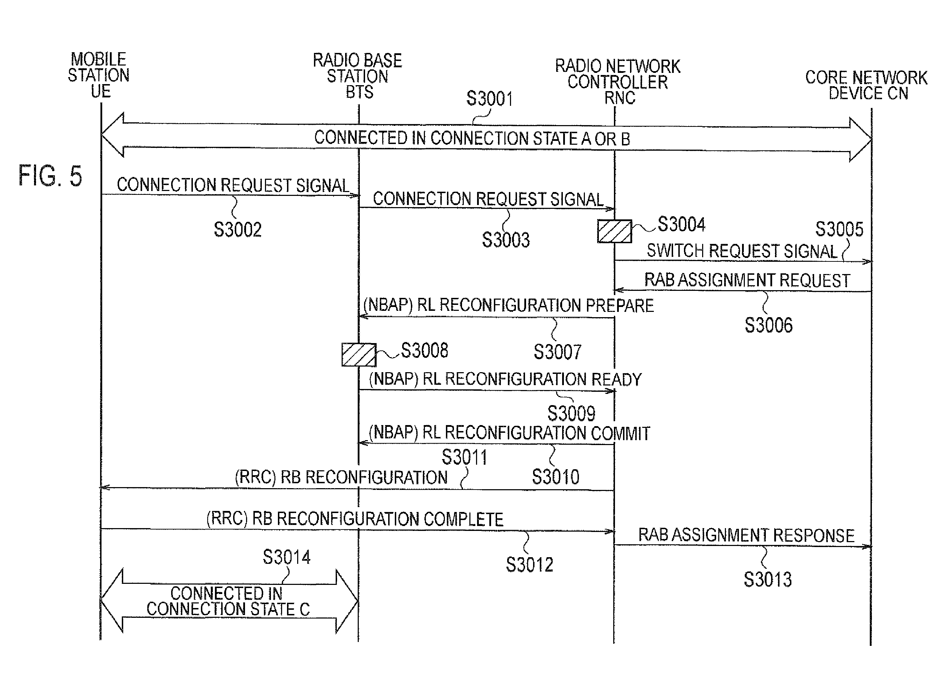

The mobile communication system according to a second embodiment of the present invention will be described with reference to FIG. 4 and FIG. 5. Hereinafter, the mobile communication system according to the embodiment will be described with a focus on a difference with the mobile communication system according to the first embodiment.

As shown in FIG. 4, the radio network controller RNC includes a connection request signal receiving unit 21, a determination unit 22, a switch request signal transmission unit 23, a connection request signal transfer unit 24 and a bearer control unit 25.

These functional units are basically the same as the functional units of the radio base station BTS according to the first embodiment shown in PIG. 2.

Next, the mobile communication system according to the second embodiment of the present invention will be described with reference to FIG. 5.

As shown in FIG. 5, in a case where the mobile station UE in the connection state A or B displays an operator-providing site provided by the server apparatus 10 or a website A provided by the server apparatus 20 in step S3001, the mobile station UE transmits to the radio base station BTS a connection request signal for a website B provided by the server apparatus 20 in step S3002.

In step S3003, the radio base station BTS transfers the received connection request signal to the radio network controller RNC.

In step S3004, the radio network controller RNC determines whether or not a predetermined condition is satisfied. The radio network controller RNC determines whether or not the destination address information included in the connection request signal transmitted by the mobile station UE in the connection state A or B is predetermined address information, for example.

When determining that the predetermined condition is satisfied, the radio network controller RNC transmits a switch request signal to the core network device CN in step S3005.

The operations in steps S3006 to S3014 below are basically the same as the operations shown in steps S1006 to S1014 shown in FIG. 3.

Note that, instead of the core network device CN, the gateway devices HNB-GW, HeNB-GW may receive the switch request signal and then starts the procedure to switch the connection state of the Mobile station UE to the connection state C in accordance with the switch request signal.

### (Mobile Communication System according to Third Embodiment of Present Invention)

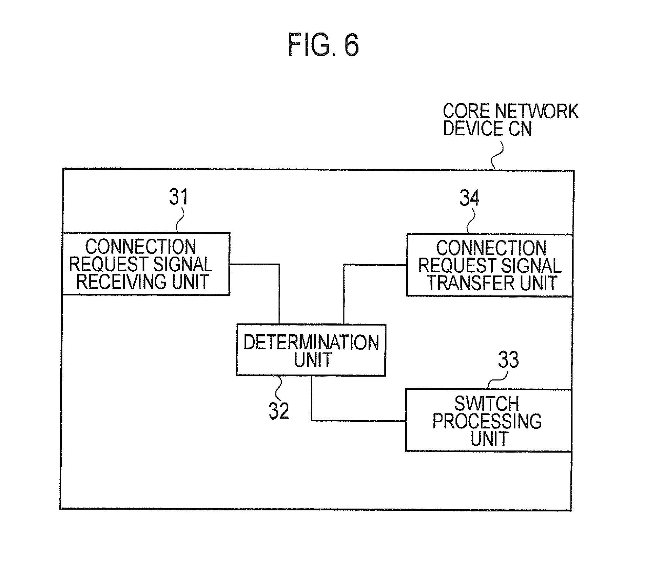

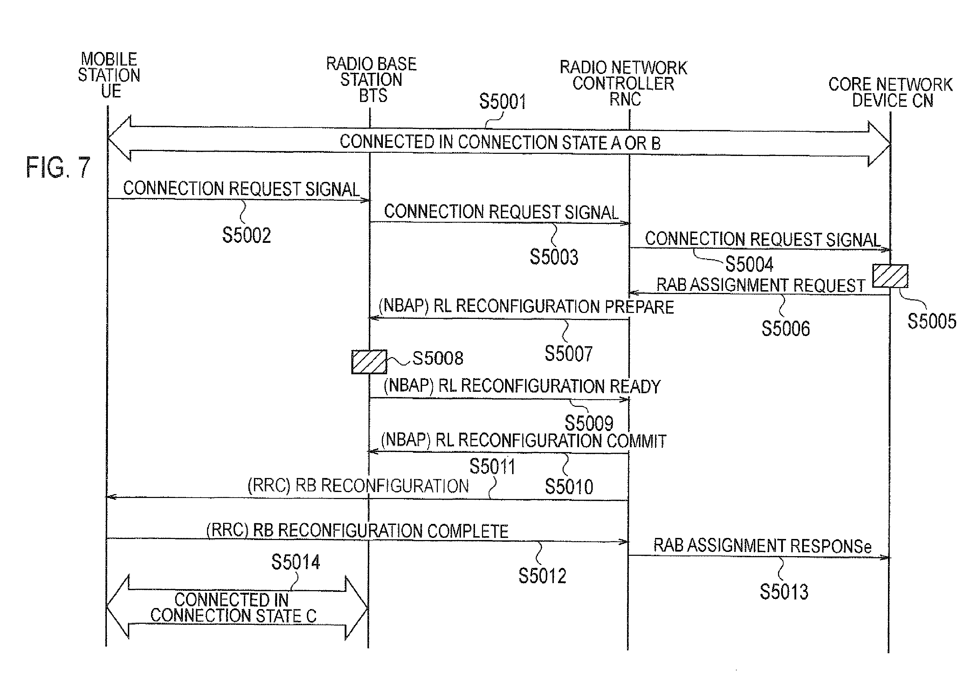

The mobile communication system according to a third embodiment of the present invention will be described with reference to FIG. 6 and FIG. 7. Hereinafter, the mobile communication system according to the embodiment will be described with a focus on a difference with the mobile communication system according to the first embodiment.

As shown in FIG. 6, the core network device CN includes a connection request signal receiving unit 31, a determination unit 32, a switch processing unit 33, and a connection request signal transfer unit 34.

The connection request signal receiving unit 31 is configured to receive a connection request signal transferred by the radio network controller RNC, as in the case of the connection request signal receiving units 11 and 12.

The determination unit 32 is configured to determine whether or not a predetermined condition is satisfied in accordance with the connection request signal received by the connection request signal receiving unit 31, as in the case of the determination units 12 and 22.

The switch processing unit 33 is configured to perform a procedure to switch the connection state of the mobile station UE. The switch processing unit 33 is configured to start the procedure to switch the connection state of the mobile station UE from the connection state A or B to the connection state C in a case where the determination unit 32 determines that a predetermined condition is satisfied, for example.

The connection request signal transfer unit 34 is configured to transfer the connection request signal received by the connection request signal receiving unit 31 to the access point APN #1 via a predetermined bearer.

Note that, the gateway device HNB-GW may be configured to include the functional units of the core network device CN shown in FIG. 6.

Next, an operation of the mobile communication system according to the third embodiment of the present invention will be described with reference to FIG. 7.

As shown in FIG. 7, in a case where the mobile station UE in the connection state A or B displays an operator-providing site provided by the server apparatus 10 or a website A provided by the server apparatus 20 in step S5001, the mobile station UE transmits to the radio base station BTS a connection request signal for a website B provided by the server apparatus 20 in step S5002.

In step S5003, the radio base station BTS transfers the received connection request signal to the radio network controller RNC.

In step S5004, the radio network controller RNC transfers the received connection request signal to the core network device CN.

In step S5005, the core network device CN determines whether or not a predetermined condition is satisfied. The core network device CN determines whether or not the destination address information included in the connection request signal transmitted by the mobile station UE in the connection state A or B is predetermined address information, for example.

When determining that the predetermined condition is satisfied, the core network device CN starts a procedure to switch the connection state of the mobile station UE to the connection state C by transmitting an "RAB Assignment Request" message to the radio network controller RNC in step S5006.

The operations in steps S5007 to S5014 below are basically the same as the operations shown in steps S1007 to S1014 shown in FIG. 3.

Note that, instead of the core network device CN, the gateway devices HNB-GW, HeNB-GW may determine whether or not a predetermined condition is satisfied, and start the procedure to switch the connection state of the mobile station UE to the connection state C in a case where the predetermined condition is satisfied.

### (Modification Example 1 of Present Invention)

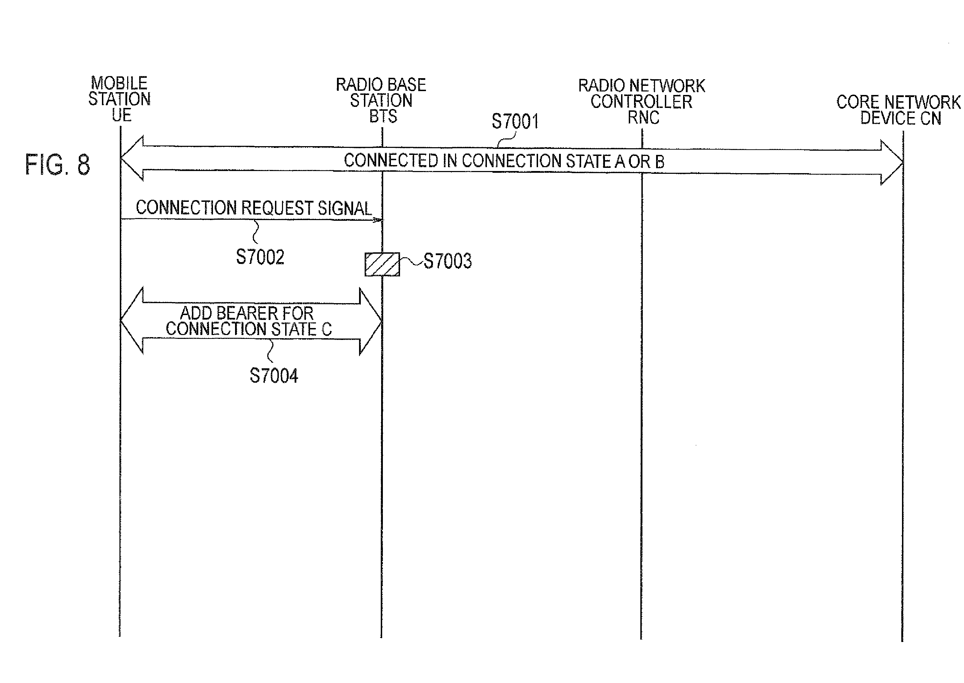

A mobile communication system according to Modification Example 1 of the first to third embodiments of the present invention will be described with reference to FIG. 8. Hereinafter, the mobile communication system according to Modification Example 1 will be described with a focus on a difference with the mobile communication systems according to the first to third embodiments described above.

In the radio base station BTS according to Modification Example 1, the bearer control unit 15 may be configured to start the procedure to establish the bearer for the connection state C without releasing the bearer for the connection state A and the bearer for the connection state B in a case where the determination unit 12 determines that a predetermined condition is satisfied.

The connection request signal transfer unit 14 may be configured to transfer the connection request signal addressed to the server apparatus 20 to the access point APN #2 via the bearer for the connection state C first, and then, upon failure of the transfer, to transfer the connection request signal addressed to the server apparatus 20 to the access point APN #1 via the bearer for the connection state B, for example, in a case where the bearer for the connection state C is established without release of the bearer for the connection state B.

Alternatively, in this case, the connection request signal transfer unit 14 may be configured to transfer the connection request signal addressed to the server apparatus 20 to the access point APN #1 via the bearer for the connection state B first, and then, upon failure of the transfer, to transfer the connection request signal addressed to the server apparatus 20 to the access point APN #2 via the bearer for the connection state C.

Here, the connection request signal transfer unit 14 may be configured to set a priority on the access point APN #1 or the access point APN #2 as the transfer destination of the connection request signal addressed to the server apparatus 20 and then to determine that the connection request signal addressed to the server apparatus 20 is transferred to the access points APN #1 or APN #2 on the basis of the priority.

In addition, the connection request signal transfer unit 14 may be configured to store a transfer result of the connection request signal addressed to the server apparatus 20 to the access point APN #1 or APN #2 and then to transfer the connection request signal addressed to the server apparatus 20, preferentially to the access point APN #1 or APN #2 whichever has a successful transfer record in the past.

Next, an operation of the mobile communication system according to Modification Example 1 of the present invention will be described with reference to FIG. 8.

As shown in FIG. 8, in a case where the mobile station UE in the connection state A or B displays an operator-providing site provided by the server apparatus 10 or a website A provided by the server apparatus 20 in step S7001, the mobile station UE transmits to the radio base station BTS a connection request signal for a website B provided by the server apparatus 20 in step S7002.

In step S7003, the radio base station BTS determines whether or not a predetermined condition is satisfied. The radio base station BTS determines whether or not the destination address information included in the connection request signal transmitted by the mobile station UE in the connection state A or B is predetermined address information, for example.

When determining that the predetermined condition is satisfied, the radio base station BTS starts the procedure to establish the bearer for the connection state C without release of the bearer for the connection state A and the bearer for the connection state B.

Aspects of the embodiments described above may be expressed in the following manner.

The feature of a first aspect of the embodiment is a mobile communication method comprising: a step A of determining whether or not a predetermined condition is satisfied in accordance with a connection request signal transmitted by a mobile station UE in a connection state A or B (first connection state) which is a state where the mobile station UE is connected to an access point APN #1 of an operator network (first network) configured to provide an operator-providing site via a radio base station BTS and a core network device CN; and a step B of switching the connection state of the mobile station UE from the connection state A or B to a connection state C (second connection state) in a case where the predetermined condition is determined to be satisfied, the connection state C being a state where the mobile station UE is connected to an access point APN #2 of the Internet (second network) not via the core network device CN but via the radio base station BTS.

In the first aspect of the embodiment, in the step A, the radio base station BTS may determine whether or not the predetermined condition is satisfied, and in the step B, when determining that the predetermined condition is satisfied, the radio base station BTS may transmit a switch request signal, and one of the core network device CN, a radio network controller RNC and a gateway device HNB-GW may start a procedure to switch the connection state of the mobile station UE in accordance with the switch request signal.

In the first aspect of the embodiment, in the step A, a radio network controller RNC arranged between the radio base station BTS and the core network device CN may determine whether or not the predetermined condition is satisfied, and in the step B, when determining that the predetermined condition is satisfied, the radio network controller RNC may transmit a switch request signal, and one of the core network device CN and a gateway device HNB-GW may start a procedure to switch the connection state of the mobile station UE in accordance with the switch request signal.

In the first aspect of the embodiment, in the step A, one of the core network device CN and a gateway device HNB-GW may determine whether or not the predetermined condition is satisfied, and in the step C, when determining that the predetermined condition is satisfied, the one of the core network device CN and the gateway device HNB-GW may start a procedure to switch the connection state of the mobile station UE.

In the first aspect of the embodiment, the predetermined condition may be determined to be satisfied in a case where destination address information included in the connection request signal transmitted by the mobile station UE in the connection state A or B is predetermined address information.

In the first aspect of the embodiment, the predetermined condition may be determined to be satisfied in a case where an access form between the radio base station BTS and the Internet (second network) is a predetermined form.

The feature of a second aspect of the embodiment is a mobile communication method comprising : a step A of determining whether or not a predetermined condition is satisfied in accordance with a connection request signal transmitted by a mobile station UE in a connection state A or B; and a step C of starting by the radio base station BTS a procedure to establish a bearer with an access point APN #2 not via the core network device CN in a case where the predetermined condition is determined to be satisfied.

The feature of a third aspect of the embodiment is a radio base station BTS comprising: a determination unit 12 configured to determine whether or not a predetermined condition is satisfied in accordance with a connection request signal transmitted by a mobile station UE in a connection state A or B; and a switch request signal transmission unit 13 configured to switch the connection state of the mobile station UE from the connection state A or B to a connection state C in a case where the predetermined condition is determined to be satisfied.

In the third aspect of the embodiment, the determination unit 12 may be configured to determine the predetermined condition is satisfied in a case where destination address information included in the connection request signal transmitted by the mobile station UE in the connection state A or B is predetermined address information.

In the third aspect of the embodiment, the determination unit 12 may be configured to determine the predetermined condition is satisfied in a case where an access form between the radio base station BTS and the Internet is a predetermined form.

The feature of a fourth aspect of the embodiment is a radio base station BTS comprising: a determination unit 12 configured to determine whether or not a predetermined condition is satisfied in accordance with a connection request signal transmitted by a mobile station UE in a connection state A or B; and a bearer control unit 15 configured to start a procedure to establish a bearer with an access point APN #2 not via the core network device CN in a case where the predetermined condition is determined to be satisfied

The feature of a fifth aspect of the embodiment is a radio network controller RNC arranged between a radio base station BTS and a core network device CN comprising: a determination unit 22 configured to determine whether or not a predetermined condition is satisfied in accordance with a connection request signal transmitted by a mobile station UE in a connection state A or B ; and a switch request signal transmission unit 23 configured to transmit a switch request signal requesting to switch the connection state of the mobile station UE from the connection state A or B to a connection state C in a case where the predetermined condition is determined to be satisfied.

The feature of a sixth aspect of the embodiment is a core network device CN comprising: a determination unit 32 configured to determine whether or not a predetermined condition is satisfied in accordance with a connection request signal transmitted by a mobile station UE in a connection state A or B ; and a switch processing unit 33 configured to start a procedure to switch the connection state of the mobile station UE from the connection state A or B to a connection state C in a case where the predetermined condition is determined to be satisfied.

The feature of a sixth aspect of the embodiment is a gateway device HNB-GW comprising: a determination unit 32 configured to determine whether or not a predetermined condition is satisfied in accordance with a connection request signal transmitted by a mobile station UE in a connection state A or B; and a switch processing unit 33 configured to start a procedure to switch the connection state of the mobile station UE from the connection state A or B to a connection state C in a case where the predetermined condition is determined to be satisfied.

Note that operation of the above described mobile station UE, radio base station BTS, radio network controller RNC, core network device CN and gateway device HNB-GW may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE, radio base station BTS, radio network controller RNC, core network device CN and gateway device HNB-GW. Also, the storage medium and the processor may be provided in the mobile station UE, radio base station BTS, radio network controller RNC, core network device CN and gateway device HNB-GW as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method comprising:
a step A of determining whether or not a predetermined condition is satisfied in accordance with a connection request signal transmitted by a mobile station in a first connection state which is a state where the mobile station is connected to an access point of a first network via a radio base station and a core network device; and
a step B of switching the connection state of the mobile station from the first connection state to a second connection state in a case where the predetermined condition is determined to be satisfied, the second connection state being a state where the mobile station is connected to an access point of a second network not via the core network device.

2. The mobile communication method according to claim 1, wherein
in the step A, the radio base station determines whether or not the predetermined condition is satisfied, and
in the step B, when determining that the predetermined condition is satisfied, the radio base station transmits a switch request signal, and one of the core network device, a radio network controller and a gateway device starts a procedure to switch the connection state of the mobile station in accordance with the switch request signal.

3. The mobile communication method according to claim 1, wherein
in the step A, a radio network controller arranged between the radio base station and the core network device determines whether or not the predetermined condition is satisfied, and
in the step B, when determining that the predetermined condition is satisfied, the radio network controller transmits a switch request signal, and one of the core network device and a gateway device starts a procedure to switch the connection state of the mobile station in accordance with the switch request signal.

4. The mobile communication method according to claim 1, wherein
in the step A, one of the core network device and a gateway device determines whether or not the predetermined condition is satisfied, and
in the step B, when determining that the predetermined condition is satisfied, the one of the core network device and the gateway device starts a procedure to switch the connection state of the mobile station.

5. The mobile communication method according to any one of clams 1 to 4, wherein
the predetermined condition is determined to be satisfied in a case where destination address information included in the connection request signal transmitted by the mobile station in the first connection state is predetermined address information.

6. The mobile communication method according to any one of claims 1 to 4, wherein
the predetermined condition is determined to be satisfied in a case where an access form between the radio base station and the second network is a predetermined form.

7. A mobile communication method comprising:
a step A of determining whether or not a predetermined condition is satisfied in accordance with a connection request signal transmitted by a mobile station in a first connection state which is a state where the mobile station is connected to an access point of a first network via a radio base station and a core network device; and
a step B of starting by the radio base station a procedure to establish a bearer with an access point of the second network not via the core network device in a case where the predetermined condition is determined to be satisfied.

8. A radio base station comprising :
a determination unit configured to determine whether or not a predetermined condition is satisfied in accordance with a connection request signal transmitted by a mobile station in a first connection state which is a state where the mobile station is connected to an access point of a first network via the radio base station and a core network device; and
a switch request signal transmission unit configured to switch the connection state of the mobile station from the first connection state to a second connection state in a case where the predetermined condition is determined to be satisfied, the second connection state being a state where the mobile station is connected to an access point of a second network not via the core network device.

9. The radio base station according to claim 8, wherein the determination unit is configured to determine the predetermined condition is satisfied in a case where destination address information included in the connection request signal transmitted by the mobile station in the first connection state is predetermined address information.

10. The radio base station according to claim 8, wherein the determination unit is configured to determine the predetermined condition is satisfied in a case where an access form between the radio base station and the second network is a predetermined form.

11. A radio base station comprising:
a determination unit configured to determine whether or not a predetermined condition is satisfied in accordance with a connection request signal transmitted by a mobile station in a first connection state which is a state where the mobile station is connected to an access point of a first network via the radio base station and a core network device ; and
a bearer control unit configured to start a procedure to establish a bearer with an access point of the second network not via the core network device in a case where the predetermined condition is determined to be satisfied.

12. A radio network controller arranged between a radio base station and a core network device comprising:
a determination unit configured to determine whether or not a predetermined condition is satisfied in accordance with a connection request signal transmitted by a mobile station in a first connection state which is a state where the mobile station is connected to an access point of a first network via the radio base station and the core network device ; and
a switch request signal transmission unit configured to transmit a switch request signal requesting to switch the connection state of the mobile station from the first connection state to a second connection state in a case where the predetermined condition is determined to be satisfied, the second connection state being a state where the mobile station is connected to an access point of a second network not via the core network device.

13. A core network device comprising:
a determination unit configured to determine whether or not a predetermined condition is satisfied in accordance with a connection request signal transmitted by a mobile station in a first connection state which is a state where the mobile station is connected to an access point of a first network via a radio base station and the core network device; and
a switch processing unit configured to start a procedure to switch the connection state of the mobile station from the first connection state to a second connection state in a case where the predetermined condition is determined to be satisfied, the second connection state being a state where the mobile station is connected to an access point of a second network not via the core network device.

14. A gateway device comprising :
a determination unit configured to determine whether or not a predetermined condition is satisfied in accordance with a connection request signal transmitted by a mobile station in a first connection state which is a state where the mobile station is connected to an access point of a first network via a radio base station and the core network device; and
a switch processing unit configured to start a procedure to switch the connection state of the mobile station from the first connection state to a second connection state in a case where the predetermined condition is determined to be satisfied, the second connection state being a state where the mobile station is connected to an access point of a second network not via the core network device.
